# EUROPEAN PATENT SPECIFICATION

(11) **EP 0 572 105 B1**
(45) Date of publication and mention of the grant of the patent: **06.08.1997**
(21) Application number: 93300728.8
(22) Date of filing: 02.02.1993
(51) Int. Cl.: B62D 3/12, F16H 55/26, B21K 1/76

(54) **Method for forming tube-shaped rack bar and device therefor**
Verfahren und Vorrichtung zum Herstellen einer rohrförmigen Zahnstange
Procédé et dispositif pour former une crémaillères tubulaire

(30) Priority: 26.05.1992 JP 158556/92
(43) Date of publication of application: 01.12.1993
(73) Proprietor: Tube Forming Co.,Ltd., Yokohama-shi (JP)
(72) Inventor: Nakamura, Masanobu, Kamakura-shi, Kanagawa-ken (JP)
(74) Representative: Carpenter, David

(56) References cited:
- GB-A- 2 007 569
- PATENT ABSTRACTS OF JAPAN vol. 14, no. 572 (M-1061) 19 December 1990 & JP-A-02 247 020 (MASANOBU NAKAMURA) 2 October 1990
- PATENT ABSTRACTS OF JAPAN vol. 50, no. 43 (M-60) 23 March 1981 & JP-A-56 001 241 (DAIDO STEEL CO LTD) 1 January 1981)

## Description

The present invention concerns a method for forming a rack bar from a metal tube which is not inferior in strength and of which weight can be reduced by more than half, and a device for use in the method.

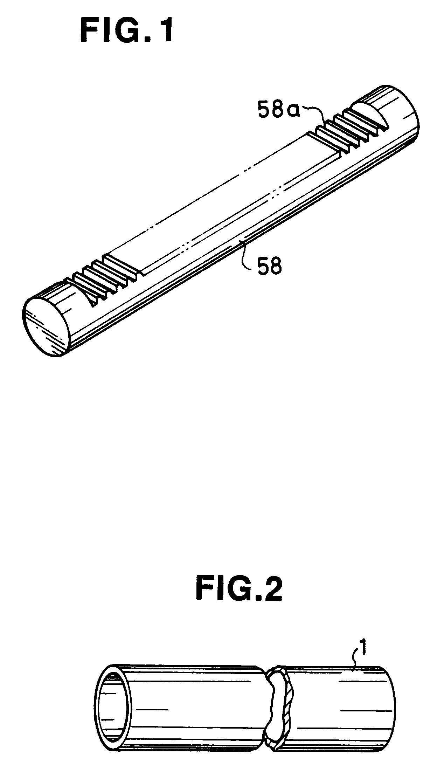

A conventional method of forming a steering rack bar for automobile use comprises cutting a portion of a cylindrical rod 58 into a semi-cylindrical shape with a flat surface, and further cutting said flat portion to form racks 58a on the surface thereof as shown in Fig. 1. Such prior art rack bars are defective because of their heavy weight and high costs as they are produced by cutting a portion of the surface of a rod made of steel, etc.

In the recent automobile manufacture, demands for every part are for light weight and better strength in view of fuel economy and safety. The object of present invention is therefore to obviate such defects of the prior art and to offer a method of manufacturing rack bars using a metal tube of which weight is less than half of and of which strength is no less than that of the conventional rod. Still another object of the present invention is to offer rack bars which are simpler and less expensive to manufacture.

It is generally conceivable to use a tube of a lesser wall thickness and to form racks with it by using a mold. This is still defective in that the wall may become too thin when racks are formed, presenting problems in strength.

If a material of a sufficient thickness was used, one could obtain racks of excellent strength, but this does not achieve the weight reduction of the rack.

JP 2247020 describes a device and a method for producing a rack bar from a metallic tube, such as defined in the preambles of claim 1 and claim 4 respectively, the rack being formed by deforming part of the tube to form a substantially flat surface, the deformation resulting in the part of the tube including the flat surface being of increased wall thickness. GB 2007569 describes a method for reducing the wall thickness of a metal tube.

The objects of the present invention are achieved by the method and the device described below.

According to the present invention there is provided a device for producing a rack bar from a metal tube comprising first split dies for primary molding, the dies defining a cylindrical cavity arranged to receive the tube, in use, and defining a longitudinal parallel groove extending from the cavity and having a width equal to that of the rack bar to be formed, a press arranged to be forced into the longitudinal parallel groove of the said dies when the tube is located within the cavity, second split dies for secondary molding, the second dies having toothed and fluted surfaces corresponding to a row of teeth to be formed on the rack bar, each tooth extending in a direction perpendicular to the axis of the rack bar, a mandrel of semi-circular cross section arranged to be pressed into the bore of the tube when the tube is received by the second dies, and characterized by means for inserting a core bar into an end of the tube bore after secondary molding, and a high pressure lubricated extruding machine which is arranged to reduce the tube wall thickness at the said end of the tube by applying pressure from and sliding on the outer periphery of the tube, the means for inserting a core bar comprising a plurality of core bars provided on a disc and extending perpendicularly to the plane thereof, spaced apart from one another and equally spaced from the axis of the disc, driving means connected to the centre of the disc to intermittently rotate the disc and for moving the disc in the direction of the axis of the disc.

The invention further relates to a method for producing a rack bar from a metal tube comprising a step of applying pressure from the outer periphery of the metal tube having a comparatively large thickness to produce a portion on which racks are to be formed and which has a semi-circular cross section, a step of mounting said tube between dies having toothed and fluted surfaces that are in complementary relation with racks to be obtained and pressing a mandrel having a semi-circular cross section into the bore of said metal tube, and characterized by a step of inserting a core bar into an end of the metal tube and mounting the tube on a high pressure, lubricated extruding machine having working projections for rolling the tube to reduce the wall thickness of the metal tube at the said end thereof, wherein the core bar is selected from a plurality of core bars which are arranged to be used in turn.

The core bars are of circular cross-section.

The invention will further be described, by way of example, with reference to the accompanying drawings, in which:
Fig. 1 is a perspective view of the prior art;
Fig. 2 is a perspective view of the tube having a greater thickness used in the present invention;
Fig. 3 is a cross sectional view showing the tube being deformed by a press;
Fig. 4 is a cross sectional view of the tube after deformation;
Fig. 5 is a perspective view of the tube after deformation;
Fig. 6 is a lateral cross sectional view showing a mandrel being inserted for forming the racks;
Fig. 7 is a cross sectional view along the line A-A of Fig. 6;
Fig. 8 is a perspective view after the racks are formed;
Fig. 9 is a lateral cross sectional view showing the extrusion of an end of the tube;

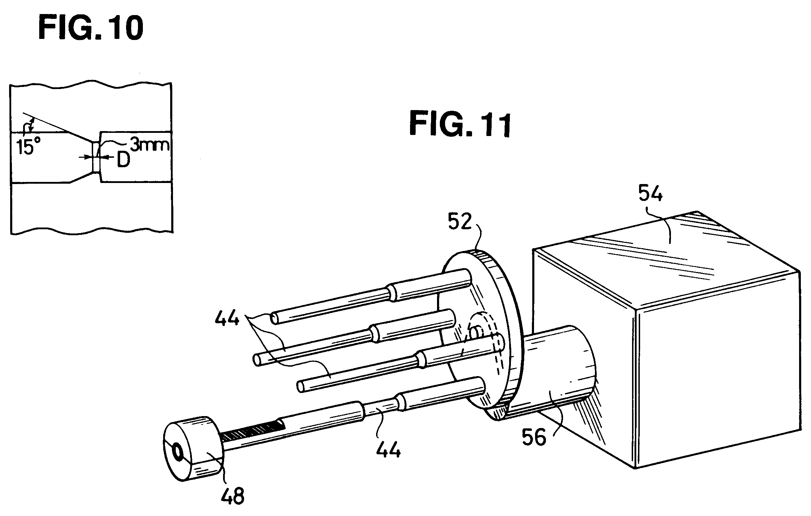

Fig. 10 is an enlarged cross sectional view of the device for decreasing the tube wall thickness;
Fig. 11 is a perspective view of a device for continuously feeding core bars under pressure;
Figs. 12 and 13 are enlarged cross sectional views showing the second embodiment of a device for decreasing the tube wall thickness; and
Fig. 14 is a side view showing another embodiment of the core bar.

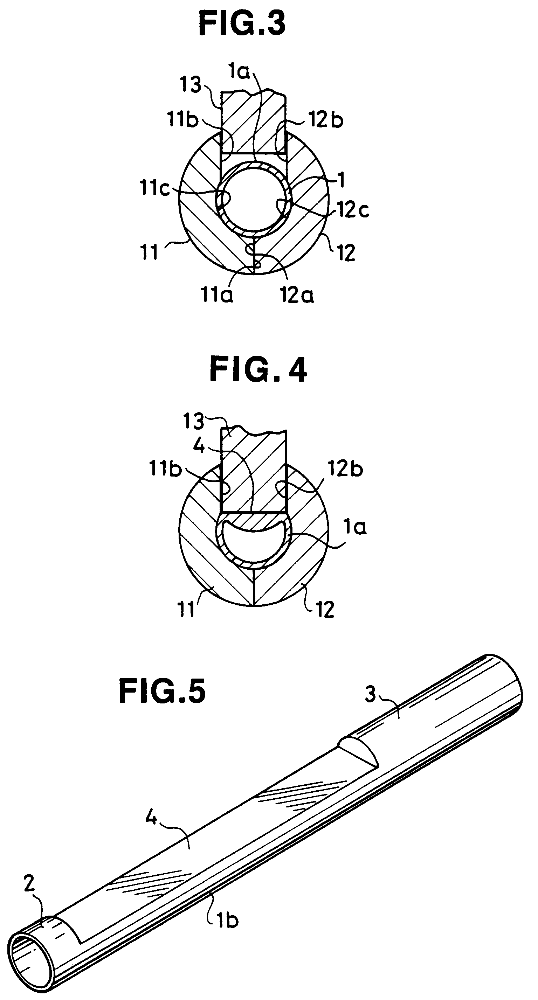

Fig. 2 is a perspective view of a metal tube 1 of relatively great wall thickness which is used in the process according to the present invention. The tube 1 is mounted on a symmetrical pair of semi-cylindrical split dies 11, 12 for primary molding as shown in Figs. 3 and 4. The dies 11, 12 abut each other closely at the lower opposing surfaces 11a, 12a as shown in the figure, and the upper opposing surfaces 11b, 12b are parallel to one another but spaced apart from one another by a distance substantially equal to the width of a toothed and fluted surface 5 to be formed on the rack bar and forming a longitudinal parallel sided groove. There are formed concave arc-like surfaces 11c, 12c between lower and upper opposing surfaces 11b, 12b, 11a, 12a of the dies 11, 12.

The metal tube 1 having substantially the same diameter as the rack bar is tightly fitted between said concave surfaces 11c, 12c, and the dies 11 and 12 are coupled together.

The top surface 1a of the metal tube 1 exposed between the surfaces 11b and 12b is heated and softened by a means not shown. Heating is not necessary for a thin walled tube, but it is preferable for a thick walled tube.

An angular rod shaped press die 13 of substantially the same length as the flat surface portion of the rack bar is pressed between the surfaces 11b and 12b, and the upper surface 1a of the metal tube 1 is pressed into a shape having a part-circular cross section.

As shown in Figs. 4 and 5, the formed tube 16 includes ends 2, 3 of circular cross section, and a flat surface 4 of a predetermined length and the same width as that of the toothed and fluted surface 5 to be formed on the rack bar. Since the upper surface 1a of the metal tube 1 is softened by heating, the back of the flat surface 4 is bulged like a thick convex lens (see Fig. 4).

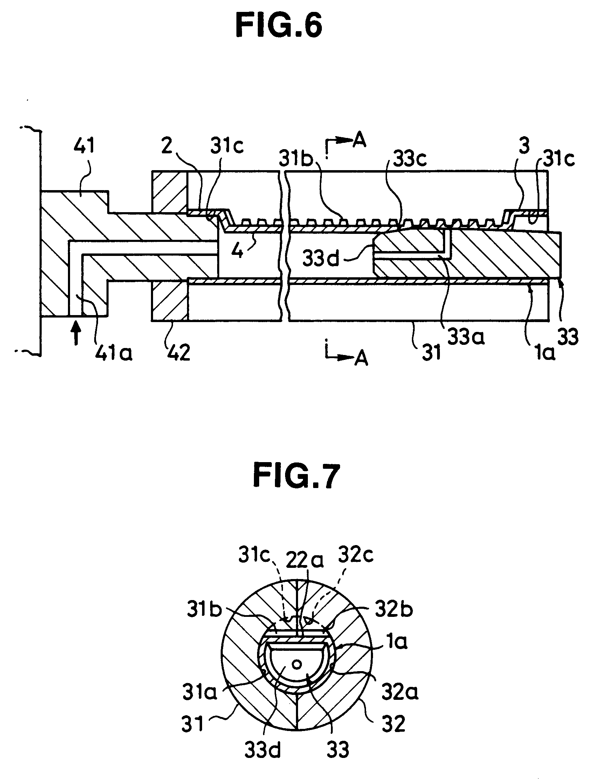

Figs. 6 and 7 show a symmetrical pair of split dies 31, 32 for secondary molding, each having a semi-cylindrical shape. The upper faces of the concave surfaces 31a, 32a on the opposing faces are perpendicular to the axis of the tube 1 except at both ends thereof and are provided with toothed and fluted surfaces 31b, 32b corresponding to the toothed and fluted surfaces 5 of the rack bar. The ends of the concave surfaces 31a, 32a are joined to further form semi-circular sections 31c, 32c which form a circular cross-section having approximately the same shape and the same diameter as the ends 2, 3 of the first press die 1a.

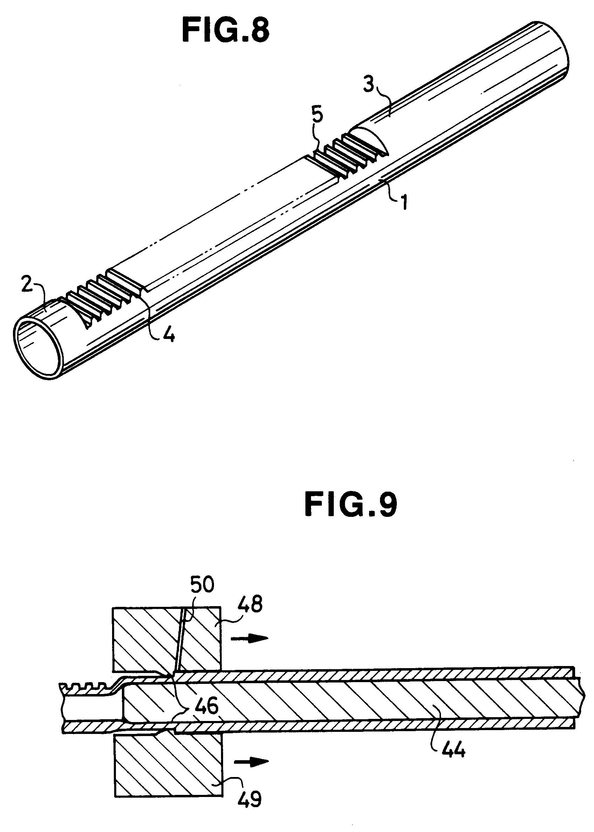

A semi-cylindrical mandrel 33 has a tapered end equal to the inner diameter of the metal tube 1, and its end 33d is formed slightly smaller than the diameter of the first formed tubular part. There is provided a path 33a for lubricant leading from the end of the mandrel to the outer peripheral surface thereof. The mandrel has an inclined portion 33c on the portion abutting the convex portion to press the convex portion toward the toothed and fluted surfaces 31a, 31b. The split dies for secondary molding 31, 32 are joined together after the first formed tubular part 1a is inserted therebetween, and the mandrel 33 is pressed into the part by supplying lubricating oil from the right hand side in the figure. The inclined portion 33c of the mandrel 33 pushes up only the flat portion 4 of the first formed tubular part 1a, with its outer periphery biting into the concave surfaces 31a, 32a of the split dies 31, 32 to thereby form a row of teeth on the flat surface and obtain a rack bar as shown in Fig. 8.

In this embodiment, a stopper 42 having a hole at the center is abutted against the left end of the dies 31, 32 as shown in Fig. 6. An adapter 41 is inserted in a liquid tight fashion through the stopper 42 and the tube 1 abutting against the stopper, and lubricating oil of the predetermined pressure is supplied from a source not shown to the tube 1 via a path 41a bored through the adapter 41.

In the case of a steering mechanism of an automobile which transmits the movement of the steering wheel of the front wheels, an elongated hollow tube portion without racks is formed. If the tube is formed of a relatively thick material, the tube cannot help but affect the weight of the automobile as a whole.

The present invention therefore offers a method and a means to reduce the tube thickness as much as possible. Into an end of the tube 1 of the second molding is inserted a cylindrical core bar 44 having about the same diameter as the inner diameter of the tube. The tube 1 is then inserted between dies 48, 49 (high pressure, lubricated extruding machine) which are provided on the inner periphery thereof with a working projection 46 each that has a trapezoidal cross section and which press the cylindrical outer periphery of the secondary formed tubular part with approximately 50 tons of pressure from above and below. The split dies 48, 49 are moved horizontally to forcibly expand and elongate the outer periphery of the tube 1.

The working projections 46 should preferably be made of super hard steel and have an angle which is approximately perpendicular to the tube surface at one end and an acute angle of 5 to 20 degrees relative to the tube surface at the other end. The width D of the contacting surface should preferably be 3 to 10 mm. When decreasing the tube thickness using the split dies, it is recommended to feed lubricating oil, etc. from the path 50 of the dies at 500 to 10,000 kg/cm² in order to prevent the tube from becoming overheated and brittle. When decreasing the tube thickness using the core bar 44, there should be provided time to cool the bar 44 before the next rack bar is produced.

The present invention therefore comprises a plural number of cylindrical core bars 44 vertically connected to a disc 52, and a driving device 54 which intermittently rotates as well as telescopically moves the disc 52 in the axial direction, the disc 52 being connected to the device at the center of the disc and via a rod 56. After a core bar 44 is used in rolling the tube outer periphery, the disc 52 is revolved by a predetermined angle, and a new core bar 44 is inserted to repeat the operation.

The method of producing rack bars using a device embodying the present invention as above constructed is described in further detail below.
(1) The portion forming a flat surface is heated and softened in advance.
   This operation enables to raise and change the back of the flat portion 4 into a convex shape when the press die is forcibly inserted in the dies.
(2) The metal tube is inserted into the split dies for primary molding, and the press die is pressed onto the portion where racks are to be formed to deform this portion of the tube. (Primary molding)
(3) The first formed tubular part is inserted in the split dies for secondary molding with the flat surface facing the toothed and fluted surface of the dies and the mandrel is then pressed into the bore of the first formed tubular part to press the back of the flat surface upward toward the toothed and fluted surfaces of the dies for secondary molding to thereby form racks.
(4) The mandrel is removed from the second formed tubular part, and then a core bar having a circular cross section is inserted into the hollow cylinder at the tube end.
(5) After inserting the core bar, the split dies having the working projections on the inner periphery thereof are applied with pressure and moved to extrude the outer peripheral surface of the metal tube. This operation reduces the thickness of the metal tube into less than half of the original thickness.

As described above, the device and the method according to the present invention uses a metal tube of relatively large thickness for easily forming the racks, and elongates and reduces the outer peripheral thickness of the tube at an end thereof after the racks are formed. The present invention thus offers a rack bar of a considerable thickness with a relatively thin-walled end which is lighter in weight but equal in functions of the prior art rack bar.

The device according to the present invention enables replacement of the core bar which had become heated in the process of rolling with a cold bar so that the rolling operation can be performed readily and continuously.

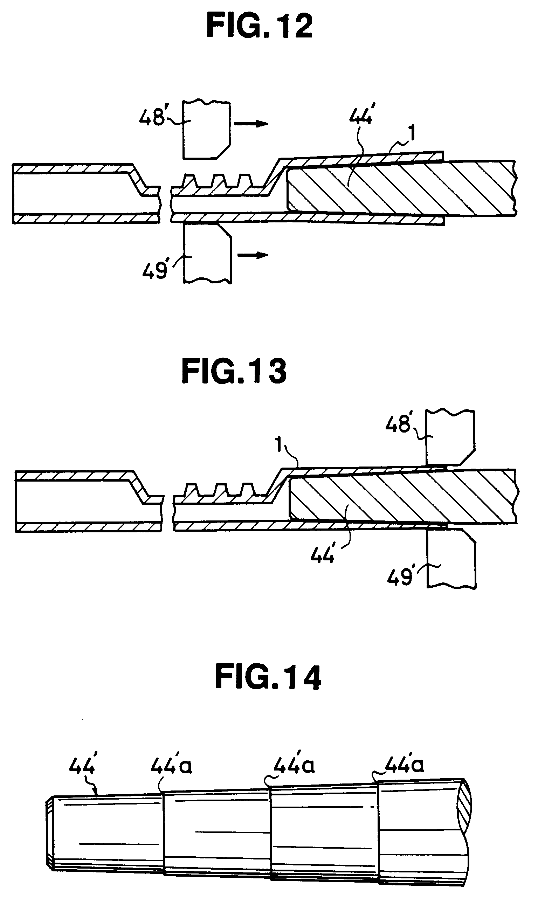

Figs. 12 and 13 show a second embodiment of the means to reduce the thickness of the tube 1 wherein the core bar 44' has a thin, tapered shape, and extruding machines 48', 49' are of the type to roll the outer periphery of the metal tube 1. According to this embodiment, the core 44' is inserted in the tube 1 to taper the outer periphery of the end of the tube 1, and then the extruding machines 48', 49' are mounted and moved over the outer periphery of the tube 1. The tube obtained in this way has a thin end and gradually increases the thickness toward the center.

In the present embodiment, the outer peripheral surface of the core 44' has the uniform taper, but the invention is not to be limited to this embodiment. A core bar having plural steps 44'a with tapered sections between the steps may be used as shown in Fig. 14.

## Claims

1. A device for producing a rack bar from a metal tube comprising first split dies (11, 12) for primary molding, the dies (11, 12) defining a cylindrical cavity arranged to receive the tube, in use, and defining a longitudinal parallel groove extending from the cavity and having a width equal to that of the rack bar to be formed, a press (13) arranged to be forced into the longitudinal parallel groove of the said dies (11, 12) when the tube is located within the cavity, second split dies (31, 32) for secondary molding, the second dies (31, 32) having toothed and fluted surfaces (31b, 32b) corresponding to a row of teeth to be formed on the rack bar, each tooth extending in a direction perpendicular to the axis of the rack bar, a mandrel (33) of semi-circular cross section arranged to be pressed into the bore of the tube when the tube is received by the second dies (31, 32), and characterized by means for inserting a core bar (44) into the tube bore after secondary molding, and a high pressure lubricated extruding machine (48, 49) which is arranged to reduce the wall thickness at an end of the tube around the core bar (44) by applying pressure to and sliding on the outer periphery of the tube, the means for inserting a core bar (44) comprising a plurality of core bars (44) provided on a disc (52) and extending perpendicularly to the plane thereof, spaced apart from one another and equally spaced from the axis of the disc (52), and driving means (54, 56) connected to the centre of the disc (52) to intermittently rotate the disc (52) and for moving the disc in the direction of its axis.

2. A device as claimed in Claim 1, characterized by means for heating the surface of the bar to be pressed when the bar is received within the cavity of the first dies (11, 12).

3. A device as claimed in Claim 1, characterized in that the core bars (44) are tapered.

4. A method for producing a rack bar from a metal tube comprising a first step of applying pressure from the outer periphery of the metal tube having a comparatively large thickness to produce a portion on which racks are to be formed and which has a semi-circular cross section, a second step of mounting said tube between dies (31, 32) having toothed and fluted surfaces (31b, 32b) that are in complementary relation with racks to be obtained and pressing a mandrel (33) having a semi-circular cross section into the bore of said metal tube, and characterized by a step of inserting a core bar (44) into an end of the metal tube and utilizing a high pressure, lubricated extruding machine (48, 49) having working projections for extruding the tube around the core bar (44) to reduce the wall thickness of the tube around the core bar (44), wherein the core bar (44) is selected from a plurality of core bars which are arranged to be used in turn.

5. A method as claimed in Claim 4, characterized in that the portion of the metal tube to be deformed in the first step is heated prior to the application of pressure.

6. A method as claimed in Claim 4, characterized in that the core bars (44) are tapered.

## Patentansprüche

1. Vorrichtung zur Herstellung einer Zahnstange aus einem Metallrohr, die aufweist: erste zweiteilige Werkzeuge (11, 12) für das primäre Formen, wobei die Werkzeuge (11, 12) einen zylindrischen Hohlraum begrenzen, der beim Gebrauch das Rohr aufnimmt, und wobei sie eine parallele Nut in der Längsrichtung begrenzen, die sich vom Hohlraum aus erstreckt und eine Breite aufweist, die der der zu bildenden Zahnstange gleicht, eine Presse (13), die in die parallele Nut der Werkzeuge (11, 12) in der Längsrichtung gedrückt wird, wenn sich das Rohr innerhalb des Hohlraumes befindet, zweite zweiteilige Werkzeuge (31, 32) für das sekundäre Formen, wobei die sekundären Werkzeuge (31, 32) verzahnte und genutete Oberflächen (31b, 32b) aufweisen, die einer auf der Zahnstange zu bildenden Zahnreihe entsprechen, wobei sich jeder Zahn in einer Richtung senkrecht zur Achse der Zahnstange erstreckt, einen Dorn (33) mit halbkreisförmigem Querschnitt, der in die Bohrung des Rohres hineingepreßt wird, wenn das Rohr von den zweiten Werkzeugen (31, 32) aufgenommen wird, und gekennzeichnet durch eine Einrichtung für das Einsetzen einer Kernstange (44) in die Rohrbohrung nach dem sekundären Formen und eine Strangpresse (48, 49) mit Hochdruckschmierung, die die Wanddicke an einem Ende des Rohres um die Kernstange (44) herum durch Anwenden von Druck und Gleiten auf den äußeren Umfang des Rohres verringern soll, wobei die Einrichtung für das Einsetzen einer Kernstange (44) aufweist: eine Vielzahl von Kernstangen (44), die auf einer Scheibe (52) angeordnet sind und sich senkrecht zu deren Ebene erstrecken, voneinander einen Abstand aufweisen und von der Achse der Scheibe (52) einen gleichen Abstand zeigen, und eine Antriebseinrichtung (54, 56), die mit der Mitte der Scheibe (52) verbunden ist, um die Scheibe (52) diskontinuerlich zu drehen, und um die Scheibe in der Richtung ihrer Achse zu bewegen.

2. Vorrichtung nach Anspruch 1, gekennzeichnet durch eine Einrichtung für das Erwärmen der Oberfläche der zu pressenden Stange, wenn die Stange innerhalb des Hohlraumes der ersten Werkzeuge (11, 12) aufgenommen wird.

3. Vorrichtung nach Anspruch 1, dadurch gekennzeichnet, daß die Kernstangen (44) kegelförmig sind.

4. Verfahren zur Herstellung einer Zahnstange aus einem Metallrohr, das aufweist: einen ersten Schritt des Anwendens von Druck vom äußeren Umfang des Metallrohres mit einer vergleichsweise großen Dicke, um einen Abschnitt herzustellen, auf dem die Zahnstangen gebildet werden sollen, und der einen halbkreisförmigen Querschnitt aufweist, einen zweiten Schritt des Montierens des Rohres zwischen den Werkzeugen (31, 32) mit verzahnten und genuteten Oberflächen (31b, 32b), die eine komplementäre Beziehung zu den Zahnstangen aufweisen, die erhalten werden sollen, und des Pressens eines Domes (33) mit einem halbkreisförmigen Querschnitt in die Bohrung des Metallrohres hinein, und gekennzeichnet durch einen Schritt des Einsetzens einer Kernstange (44) in ein Ende des Metallrohres und des Benutzens einer Strangpresse (48, 49) mit Hochdruckschmierung mit Bearbeitungsvorsprüngen für das Strangpressen des Rohres um die Kernstange (44) herum, um die Wanddicke des Rohres um die Kernstange (44) herum zu verringern, wobei die Kernstange (44) aus einer Vielzahl von Kernstangen ausgewählt wird, die angeordnet sind, damit sie abwechselnd verwendet werden können.

5. Verfahren nach Anspruch 4, dadurch gekennzeichnet, daß der Abschnitt des Metallrohres, der beim ersten Schritt verformt werden soll, vor der Anwendung von Druck erwärmt wird.

6. Verfahren nach Anspruch 4, dadurch gekennzeichnet, daß die Kernstangen (44) kegelförmig sind.

## Revendications

1. Dispositif pour fabriquer une barre de crémaillère en partant d'un tube métallique, qui comprend les éléments suivants: des premières matrices divisées (11, 12) pour le moulage primaire, les matrices (11, 12) formant une cavité cylindrique disposée pour recevoir le tube en service et présentant une rainure parallèle longitudinale partant de la cavité, ayant une largeur égale à celle de la barre de crémaillère à fabriquer, une presse (13) disposée pour être poussée dans la rainure parallèle longitudinale desdites matrices (11, 12) quand le tube est placé dans la cavité, des deuxièmes matrices divisées (31, 32) pour le moulage secondaire, les deuxièmes matrices (31, 32) ayant des surfaces dentées et cannelées (31b, 32b) correspondant à une rangée de dents à former dans la barre de crémaillère, chaque dent s'étendant dans une direction perpendiculaire à l'axe de la barre de crémaillère, un mandrin (33) à section transversale semi-circulaire disposé pour être poussé dans l'ouverture du tube quand le tube est placé dans les deuxièmes matrices (31, 32) et caractérisé par un moyen pour insérer une barre noyau (44) dans l'ouverture du tube après le moulage secondaire et une extrudeuse lubrifiée à haute pression (48, 49), disposée pour diminuer l'épaisseur de la paroi à une extrémité du tube autour de la barre noyau (44) par application de pression et glissement sur la périphérie externe du tube, le moyen pour insérer une barre noyau (44) comprenant plusieurs barres noyaux (44) placées sur un disque (52) et s'étendant perpendiculairement à son plan, écartées les unes des autres et écartées également par rapport à l'axe du disque (52) et un moyen d'entraînement (54, 56) connecté au centre du disque (52) pour faire tourner le disque (52) par intermittence et pour déplacer le disque dans la direction de son axe.

2. Dispositif selon la revendication 1, caractérisé par un moyen pour chauffer la surface de la barre à presser quand la barre est placée dans la cavité des premières matrices (11, 12).

3. Dispositif selon la revendication 1, caractérisé en ce que les barres noyaux (44) sont de forme conique.

4. Procédé de fabrication de barres de crémaillère en partant d'un tube métallique, qui comprend comme première étape l'application d'une pression depuis la périphérie externe du tube métallique ayant une épaisseur relativement grande pour produire une partie sur laquelle doivent être formées les crémaillères et qui a une section transversale semi-circulaire, une deuxième étape consistant à monter ledit tube entre les matrices (31, 32) ayant des surfaces dentées et cannelées (31b, 32b) qui sont en relation complémentaire avec les crémaillères à obtenir et à presser un mandrin (33) ayant une section transversale semi-circulaire dans l'ouverture dudit tube métallique, et caractérisé par une étape consistant à insérer une barre noyau (44) dans une extrémité du tube métallique et à utiliser une extrudeuse lubrifiée à haute pression (48, 49) ayant des saillies de travail pour extruder le tube autour de la barre noyau (44) pour diminuer l'épaisseur de la paroi du tube autour de la barre noyau (44), dans lequel la barre noyau (44) est choisie parmi plusieurs barres noyaux qui sont conçues pour être utilisées successivement.

5. Procédé selon la revendication 4, caractérisé en ce que la partie du tube métallique à déformer au cours de la première étape est chauffée avant l'application de la pression.

6. Procédé selon la revendication 4, caractérisé en ce que les barres noyaux (44) sont de forme conique.
